# EUROPEAN PATENT APPLICATION

(11) **EP 4 621 141 A1**
(43) Date of publication of application: **24.09.2025**
(21) Application number: 25160270.2
(22) Date of filing: 26.02.2025
(51) Int. Cl.: E02F 9/20, E02F 9/26, E02F 9/16

(54) **WORK MACHINE**

(30) Priority: 18.03.2024 JP 2024042652
(71) Applicant: Yanmar Holdings Co., Ltd., Osaka-shi, Osaka (JP)
(72) Inventor: MURAOKA, Hiroyuki, Chikugo-shi (JP)
(74) Representative: Sekiguchi, Kazuya

(57) **Abstract**

[Problem] To provide a work machine capable of favorably ensuring a field of view of an operator when viewing a display device even in a configuration in which an operation box is disposed in front of a driver's seat and the operation box supports a pair of left and right operation levers swingably in a front-rear direction.

[Solution] The work machine includes an operation box that is disposed in front of a driver's seat and supports a pair of left and right operation levers protruding upward from an upper surface so as to be swingable in a front-rear direction. The operation box has a display device that is disposed on the upper surface and notifies a state of the work machine. On the upper surface, the display device is disposed on an outer side of each swing area of the pair of left and right operation levers and is disposed on one side in a left-right direction with respect to a middle area interposed between the left and right swing areas.

## Description

### TECHNICAL FIELD

The present invention relates to a work machine.

### BACKGROUND ART

For example, Patent Document 1 discloses a motor grader as an example of a work machine. In the motor grader, a handle post is erected at the center of a front end part of an operation floor. The handle post includes a monitor panel and a handle. The handle is provided on an upper front surface of the handle post, and protrudes forward from a position below and adjacent to the monitor panel.

### PRIOR ART DOCUMENT

### PATENT DOCUMENT

Patent Document 1: Japanese Unexamined Patent Publication No. H11-158923

### SUMMARY OF INVENTION

### TECHNICAL PROBLEM

In the motor grader of Patent Document 1, a monitor panel is disposed in front of the center in the left-right direction with respect to a handle in a handle post disposed in front of a driver's seat. Therefore, if the positional relationship between the handle and the monitor panel in Patent Document 1 is applied as is to a work machine that supports a pair of left and right operation levers that swing in the front-rear direction in an operation box disposed in front of the driver's seat (instead of a rotating handle), the field of view of the operator when viewing the monitor panel may be obstructed by the operation levers that swing in the front-rear direction.

The present invention was made in order to solve the above-described problem, and an object of the present invention is to provide a work machine capable of preferably ensuring a field of view of an operator when viewing a display device even in such a configuration that an operation box disposed in front of a driver's seat supports a pair of left and right operation levers so as to be swingable in a front-rear direction.

### SOLUTION TO PROBLEM

A work machine according to one aspect of the present invention is a work machine including an operation box disposed in front of a driver's seat and supporting a pair of left and right operation levers protruding upward from an upper surface so as to be swingable in a front-rear direction, in which the operation box has a display device disposed on the upper surface and configured to notify a state of the work machine, the display device is disposed on an outer side of each swing area of the pair of left and right operation levers and is disposed on one side in the left-right direction with respect to a middle area interposed between the left and right swing areas on the upper surface.

### ADVANTAGEOUS EFFECTS OF INVENTION

Even in such a configuration that the operation box is disposed in front of the driver's seat and the operation box supports the pair of left and right operation levers so as to be swingable in the front-rear direction, it is possible to preferably ensure the field of view of the operator when viewing the display device.

### BRIEF DESCRIPTION OF DRAWINGS

FIG. 1 is a side view illustrating a schematic configuration of a hydraulic excavator, which is an example of a work machine according to an Embodiment of the present invention;
FIG. 2 is a perspective view of the above-described hydraulic excavator as viewed obliquely from the front;
FIG. 3 is a block diagram schematically illustrating a configuration of an electric system and a hydraulic system of the above-described hydraulic excavator;
FIG. 4 is a perspective view of an operation box provided in the above-described hydraulic excavator as viewed obliquely from the rear;
FIG. 5 is a schematic plan view of the above-described operation box as viewed from above;
FIG. 6 is a schematic rear view of the above-described operation box as viewed from the rear; and
FIG. 7 is a schematic plan view of a display device of the above-described operation box in an enlarged manner.

### DESCRIPTION OF EMBODIMENTS

An Embodiment of the present invention will be described below with reference to the drawings.

### 1. Work Machine

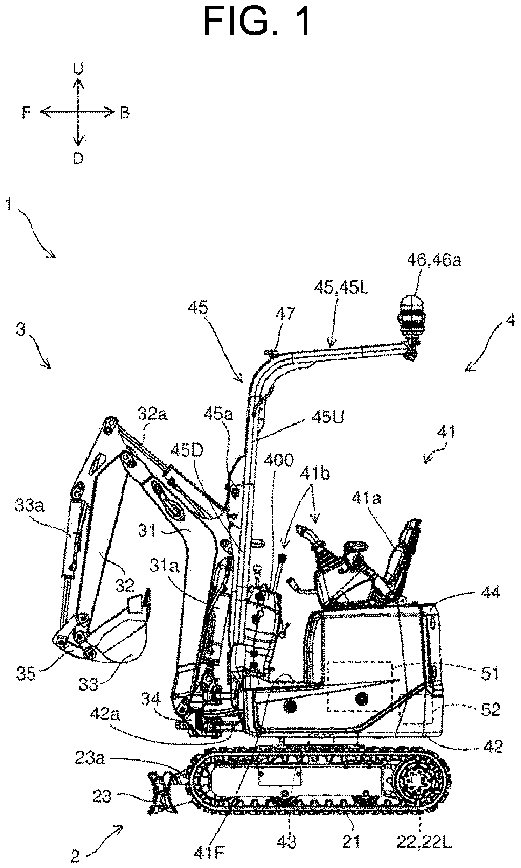

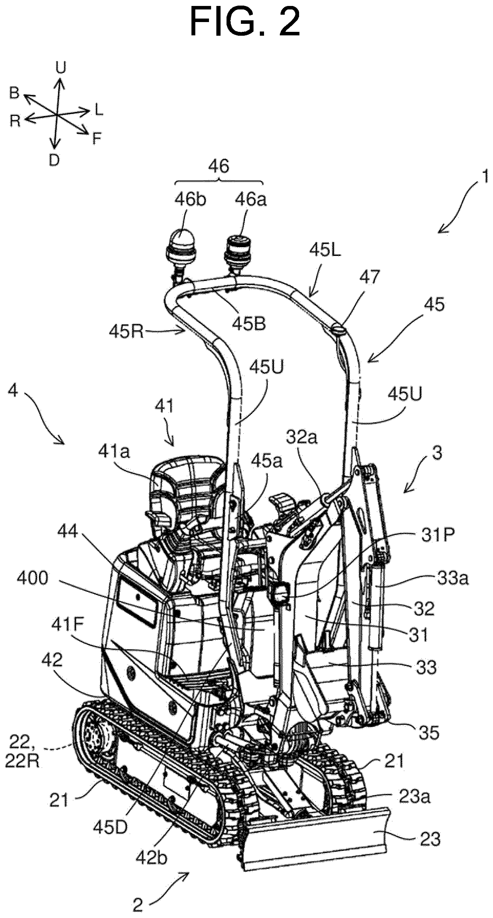

FIG. 1 is a side view illustrating a schematic configuration of a hydraulic excavator (electric excavator) 1, which is an example of an electric work machine of this Embodiment. FIG. 2 is a perspective view of the hydraulic excavator 1 as viewed from diagonally front. The hydraulic excavator 1 includes a lower traveling body 2, a work implement 3, and an upper revolving body 4. In the following, the upper revolving body 4 may be referred to as a "machine body" in some cases.

Here, directions are defined as follows. A direction in which an operator (manipulator, driver) seated on a driver's seat 41a of the upper revolving body 4 faces a front is defined as forward, and a direction opposite to that is defined as backward. Therefore, in a state in which the upper revolving body 4 is not revolving with respect to the lower traveling body 2 (revolving angle 0°), the front-back direction of the upper revolving body 4 matches the direction in which the lower traveling body 2 moves forward and backward. In addition, the left side as viewed from the operator seated on the driver's seat 41a is referred to as "left" and the right side as "right". Furthermore, a gravity direction perpendicular to the front-rear direction and the left-right direction is defined as an up-down direction, an upstream side in the gravity direction is defined as "up", and a downstream side is defined as "down". In the drawings, the hydraulic excavator 1 is illustrated in a state in which the upper revolving body 4 is not revolving with respect to the lower traveling body 2. In addition, in the drawings, the forward is indicated by a symbol "F", the backward is indicated by a symbol "B", the left is indicated by a symbol "L", the right is indicated by a symbol "R", the upward is indicated by a symbol "U", and the downward is indicated by a symbol "D".

The lower traveling body 2 includes a pair of left and right crawlers 21 and a pair of left and right traveling motors 22. Each traveling motor 22 is a hydraulic motor. The left and right traveling motors 22 drive the left and right crawlers 21, respectively, so that the hydraulic excavator 1 can be moved forward and backward. The lower traveling body 2 further includes a blade 23 for leveling the ground, and a blade cylinder 23a for rotationally moving the blade 23 in the up-down direction.

The work implement 3 includes a boom 31, an arm 32, and a bucket 33. By driving the boom 31, the arm 32, and the bucket 33 independently, an excavation work of earth, sand and the like can be performed. In addition, instead of the bucket 33, an attachment can be attached as appropriate. As the attachment, when a breaker is attached, for example, a breaking work or demolition work can be performed by the breaker.

The boom 31, the arm 32, and the bucket 33 are driven by a boom cylinder 31a, an arm cylinder 32a, and a bucket cylinder 33a, respectively. The boom cylinder 31a, the arm cylinder 32a, and the bucket cylinder 33a are constituted by hydraulic cylinders.

A base end part of the boom 31, that is, an end part of the boom 31 on a side opposite to a side connected to the arm 32 is swingably connected to a tip end part 42a of a revolving frame 42 via a boom bracket 34. That is, the hydraulic excavator 1 of this Embodiment has a boom-swing function in which the boom 31 swings to the left and right with the tip end part 42a as a starting point. On the revolving frame 42, a swing cylinder 42b (see FIG. 2) is provided. The swing cylinder 42b is constituted by a hydraulic cylinder and causes the boom 31 to swing by expanding / contracting.

The boom 31 has a shape of being bent forward at an obtuse angle, and is rotationally moved in the up-down direction by expansion and contraction of the boom cylinder 31a. The boom cylinder 31a is located closer to the rear-surface side (backward side) than the boom 31. A base end part of the boom cylinder 31a is supported by the boom bracket 34, and a tip end part is connected to a bent part of the boom 31, so as to be movable and capable of expansion and contraction. The arm 32 is connected to the tip end part of the boom 31 rotationally movably. The arm 32 is rotationally moved in the up-down direction by expansion / contraction of the arm cylinder 32a. The arm cylinder 32a has a base end part supported by the boom 31, and a tip end part is connected to a base end part of the arm 32 so as to be movable and capable of expansion and contraction. The bucket 33 is connected to a tip end part of the arm 32 via a link mechanism 35 and is rotationally moved in the up-down direction by expansion / contraction of the bucket cylinder 33a. The bucket cylinder 33a has a base end part supported by the arm 32, and a tip end part is connected to the link mechanism 35 so as to expand and contract.

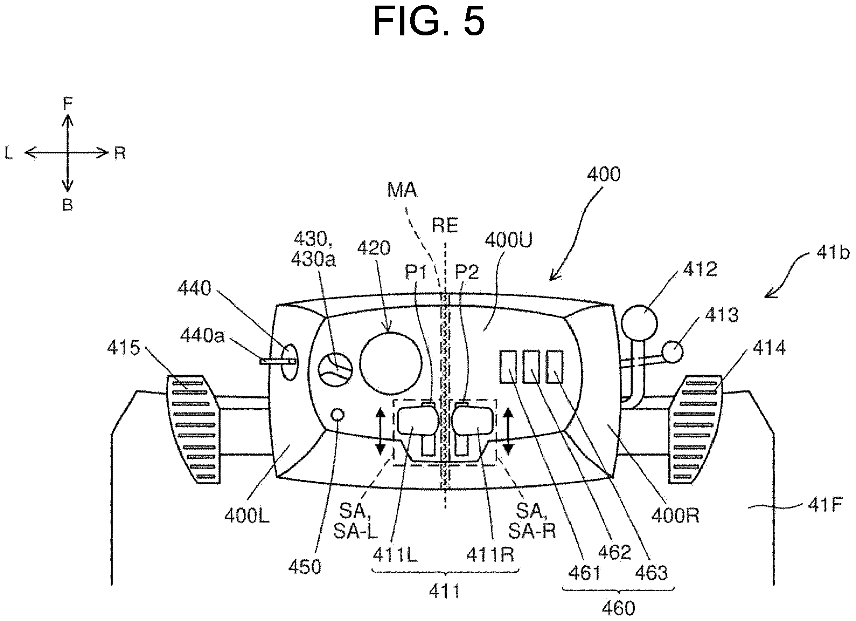

A work lamp 31P (see FIG. 2) is attached to the right side surface of the boom 31. The work lamp 31P is turned on or off by an operation of one (specifically, a work-lamp switch 463) of switching switches 460 (see FIG. 5), which will be described later. When performing a work by the hydraulic excavator 1, the operator can turn on the work lamp 31P to brightly illuminate the front by operating the work-lamp switch 463 as necessary.

The upper revolving body 4 is positioned above the lower traveling body 2 and is provided capable of revolving with respect to the lower traveling body 2. A driving portion 41, the revolving frame 42, a revolving motor 43, and a machine room 44 are disposed in the upper revolving body 4. The upper revolving body 4 revolves by the revolving motor 43, which is a hydraulic motor via a revolving bearing (not shown).

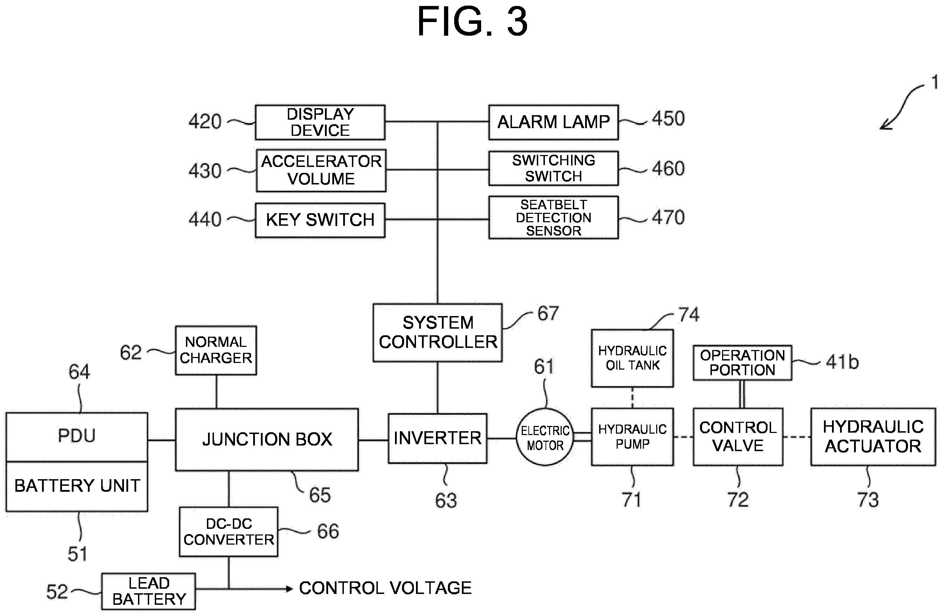

The driver's seat 41a is disposed in the driving portion 41. An operation portion 41b is disposed around the driver's seat 41a. The operation portion 41b includes an operation lever, a button, a pedal, and the like. An operator is seated on the driver's seat 41a and operates the operation portion 41b so that a hydraulic actuator 73 (see FIG. 3), which will be described later, is driven. As a result, traveling of the lower traveling body 2, an excavating work of the work implement 3, revolving of the upper revolving body 4 and the like can be performed.

A machine room 44 is disposed below the driver's seat 41a. In the machine room 44, a battery unit 51 is disposed. The battery unit 51 is constituted by, for example, a lithium-ion battery unit. The battery unit 51 stores electric power and supplies electric power to an electric motor 61 (see FIG. 3) so as to drive the electric motor 61.

A lead battery 52 is also disposed in the machine room 44. The lead battery 52 outputs a low-voltage (12 V, for example) DC voltage. The output from the lead battery 52 is supplied as a control voltage to, for example, a system controller 67 (see FIG. 3).

The upper revolving body 4 further includes a ROPS frame 45. The ROPS frame 45 is a guard provided in order to protect the operator in the event of an overturn of the hydraulic excavator 1. The ROPS frame 45 is so configured that a left frame 45L and a right frame 45R are coupled by a coupling frame 45B.

The left frame 45L and the right frame 45R are connected to a left lower-front part and a right lower-front part of a floor 41F of the driving portion 41, respectively. The left frame 45L and the right frame 45R have an L-shape that extends upward from the floor 41F side and then bends rearward. A coupling frame 45B extends in the left-right direction, and one end part and the other end part are connected to each of rear ends of the left frame 45L and the right frame 45R. The bent part and a connecting part of each frame are formed to be curved.

Each of the left frame 45L and the right frame 45R has an upper frame 45U and a lower frame 45D. The upper frame 45U and the lower frame 45D are connected via a hinge 45a, capable of relative rotational movement. For example, when the hydraulic excavator 1 is loaded on a bed of a truck or the like and transported, the upper frame 45U is rotationally moved forward with respect to the lower frame 45D with the hinge 45a as a fulcrum. As a result, the ROPS frame 45 can be folded down, and a maximum height of the hydraulic excavator 1 at the transport can be kept low.

The display lamp 46 is attached to the ROPS frame 45. Although the display lamp 46 is configured by, for example, a rotating lamp but may be configured by an LED lamp. The display lamp 46 includes a first display lamp 46a and a second display lamp 46b. The first display lamp 46a and the second display lamp 46b are disposed side by side in the left-right direction on the coupling frame 45B of the ROPS frame 45 (see FIG. 2).

When the operator is seated on the driver's seat 41a and fastens the seat belt, the first display lamp 46a is turned on in green. As a result, a worker working around the hydraulic excavator 1 can recognize that the operator fastens the seat belt by looking at the first display lamp 46a.

The second display lamp 46b is turned on or off when an operator seated on the driver's seat 41a operates a beacon switch 461 (see FIG. 5), which will be described later. For example, the operator turns on the second display lamp 46b by operating the beacon switch 461 at the start of the work by the hydraulic excavator 1, and turns off the second display lamp 46b by operating the beacon switch 461 at the end of the work. As a result, a worker around the hydraulic excavator 1 can recognize that the hydraulic excavator 1 is performing a work or not by looking at the lighted state of the second display lamp 46b.

To the ROPS frame 45, a communication unit 47 is attached. The communication unit 47 is provided in order to acquire position information of the own vehicle (the hydraulic excavator 1) by receiving a radio signal transmitted from a positioning satellite and to perform wireless communication with an external remote monitoring device.

The hydraulic excavator 1 may have such a configuration that a hydraulic device such as a hydraulic actuator (for example, a hydraulic motor or a hydraulic cylinder) and an actuator driven by electric power are used together. The actuators driven by electric power include an electric traveling motor, an electric cylinder, an electric revolving motor and the like, for example.

### 2. Configuration of Electric System and Hydraulic System

FIG. 3 is a block diagram schematically illustrating configurations of an electric system and a hydraulic system of the hydraulic excavator 1. Note that, in that drawing, a path through which an electric current or an electric signal flows is illustrated by a solid line, and a path through which a hydraulic oil flows is illustrated by a broken line for convenience.

The hydraulic excavator 1 includes an electric motor 61, a normal charger 62, an inverter 63, a Power Distribution Unit (PDU) 64, a junction box 65, a DC-DC converter 66, and a system controller 67 in the machine room 44. The system controller 67 is configured by an electronic control unit, also referred to as an ECU (Electronic Control Unit), and executes electrical control of each part of the hydraulic excavator 1.

The electric motor 61 is driven by electric power supplied from the battery unit 51 via the junction box 65 and the inverter 63. The electric motor 61 is constituted by a permanent-magnet motor or an induction motor.

The normal charger 62 (also referred to as a power feeder) converts an AC voltage supplied from an external power supply via a cable (not shown) into a DC voltage. The voltage (DC voltage) output from the normal charger 62 is supplied to the battery unit 51 via the junction box 65 and the PDU 64. As a result, the battery unit 51 is charged. Charging of the battery unit 51 at this time is referred to as normal charging. Note that, the hydraulic excavator 1 may include a quick-charging connector to which a quick-charging cable is connected. In this case, the battery unit 51 can be quickly charged.

The inverter 63 converts a DC voltage supplied from the battery unit 51 into an AC voltage and supplies the AC voltage to the electric motor 61. As a result, the electric motor 61 is rotated. The supply of the AC voltage (current) from the inverter 63 to the electric motor 61 is performed on the basis of a rotation command output from the system controller 67.

The PDU 64 is a battery control unit that controls an internal battery relay so as to control input and output of the battery unit 51. The junction box 65 is constituted to include a charger relay, an inverter relay, fuses, and the like. The voltage output from the battery unit 51 is supplied to the inverter 63 via the PDU 64 and the junction box 65.

The DC-DC converter 66 reduces a direct-current voltage of a high voltage (for example, 300 V) supplied from the battery unit 51 via the PDU 64 and the junction box 65 to a low voltage (for example, 12 V). The voltage output from the DC-DC converter 66 is supplied to the system controller 67 or the like in the same manner as the output from the lead battery 52.

A plurality of hydraulic pumps 71 are connected to a rotating shaft (output shaft) of the electric motor 61. The plurality of hydraulic pumps 71 include variable displacement pumps and fixed displacement pumps. FIG. 3 illustrates only one hydraulic pump 71 as an example. Each hydraulic pump 71 is connected to a hydraulic oil tank 74.

When the hydraulic pump 71 is driven by the electric motor 61, the hydraulic oil in the hydraulic oil tank 74 is supplied to the hydraulic actuator 73 via a control valve 72. As a result, the hydraulic actuator 73 is driven. The control valve 72 is a directional switching valve that controls the flow direction and the flow rate of the hydraulic oil supplied to the hydraulic actuator 73. The hydraulic actuator 73 includes hydraulic motors (for example, the left and right traveling motors 22 and the revolving motor 43 in FIG. 1) and hydraulic cylinders (for example, the boom cylinder 31a, the arm cylinder 32a, and the bucket cylinder 33a in FIG. 1).

The above-described control valve 72 has a spool for adjusting an amount of hydraulic oil discharged to the hydraulic actuator 73. The spool is connected to an operation portion 41b disposed in the driving portion 41 via a link mechanism. As a result, the discharge amount of the hydraulic oil in the control valve 72 can be mechanically controlled by the operation of the operation portion 41b. Note that, as a control system of the control valve 72, other systems such as a pilot system, an electromagnetic system or the like may be adopted.

The above-described control valve 72 is disposed inside the operation box 400 (see FIGS. 1 and 2). The operation box 400 is disposed in front of the driver's seat 41a.

As shown in FIG. 3, the hydraulic excavator 1 of this Embodiment further includes a display device 420, an accelerator volume 430, a key switch 440, an alarm lamp 450, a switching switch 460, and a seat-belt detection sensor 470. The display device 420, the accelerator volume 430, the key switch 440, the alarm lamp 450, the switching switch 460, and the seat-belt detection sensor 470 are electrically connected to the system controller 67. Therefore, the system controller 67 can turn on the first display lamp 46a shown in FIG. 1, when the seat-belt detection sensor 470 detects that the operator fastens the seat belt, and can turn off the first display lamp 46a, when the operator does not fasten the seat belt, for example.

The display device 420, the accelerator volume 430, the key switch 440, the alarm lamp 450, and the switching switch 460 are provided in the operation box 400. In addition, various levers and pedals as the operation portions 41b are also disposed in the operation box 400, and hereinafter, the disposition of each portion in the operation box 400 including the details of the operation portion 41b will be described.

### 3. Disposition of Each Portion in Operation Box

### 3-1. Operation Portion

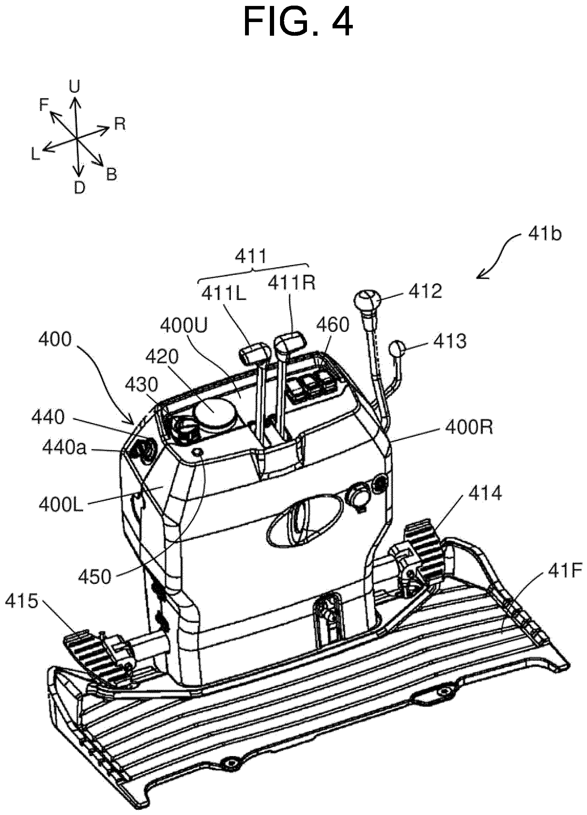

FIG. 4 is a perspective view of the operation box 400 as viewed obliquely from the rear. In addition, FIG. 5 is a schematic plan view of the operation box 400 as viewed from above. The operation portion 41b has an operation lever 411, a blade lever 412, an expansion / contraction lever 413, a boom swing pedal 414, and a Power Take Off (PTO) pedal 415.

The operation lever 411 is a traveling lever and is provided so as to protrude upward from an upper surface 400U of the operation box 400. The operation lever 411 includes a pair of left and right operation levers 411L and 411R. The operation box 400 supports a pair of left and right operation levers 411L and 411R such that they can swing in the front-rear direction.

That is, the hydraulic excavator 1 of this Embodiment includes the operation box 400 that supports the pair of left and right operation levers 411L and 411R protruding upward from the upper surface 400U swingably in the front-rear direction.

Here, the swinging means swinging in a predetermined direction (here, the front-rear direction) and has the same meaning as rotationally moving around a predetermined axis. In this Embodiment, since the operation lever 411 swings in the front-rear direction, it can also be said that the operation lever 411 rotationally moves in the front-rear direction around an axis extending in the left-right direction in the operation box 400.

The left operation lever 411L is operated to control driving (a rotating direction, for example) of the left traveling motor 22L (see FIG. 1). The right operation lever 411R is operated to control driving of the right traveling motor 22R (see FIG. 2). Therefore, for example, when both the left and right operation levers 411L and 411R are tilted forward from the neutral position, the lower traveling body 2 (hydraulic excavator 1) moves forward, and when both of them are tilted backward from the neutral position, the lower traveling body 2 moves backward. In addition, by tilting the left operation lever 411L and the right operation lever 411R to predetermined positions in the front-rear direction, it is possible to cause the lower traveling body 2 to perform each traveling such as right revolving, left revolving and revolving on the spot.

The pair of left and right operation levers 411L and 411R are disposed (supported) on the upper surface 400U on the left side and the right side, respectively, with respect to a reference line RE (see FIG. 5) extending in the front-rear direction. That is, the pair of left and right operation levers 411L and 411R are located on opposite sides in the left-right direction with respect to the reference line RE and are in a positional relation of sandwiching the reference line RE in the left-right direction. The reference line RE is a virtual line passing through the center of the upper surface 400U in the left-right direction and extending in the swing direction (front-rear direction).

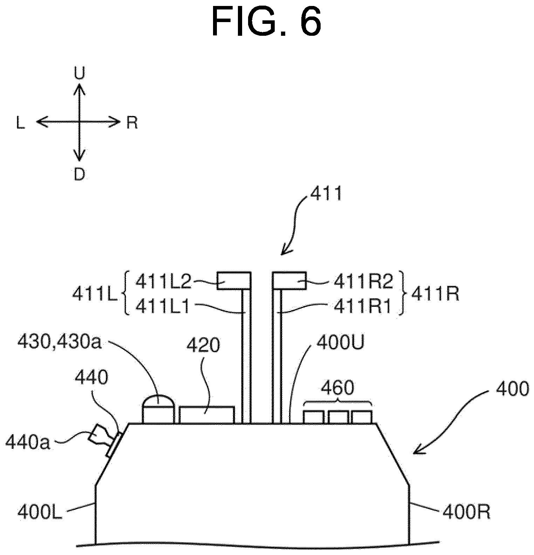

FIG. 6 is a schematic rear view of the operation box 400 as viewed from the rear. The left operation lever 411L includes a left column 411L1 and a left grip portion 411L2. The left column 411L1 is a leg part that passes through a left opening P1 (see FIG. 5) provided in the upper surface 400U of the operation box 400 and protrudes upward from the upper surface 400U. The left opening P1 is formed in a rectangular shape extending in the front-rear direction and defines a swing range of the left operation lever 411L (particularly, the left column 411L1) in the front-rear direction. A lower end of the left column 411L1 is fixed to a rotating shaft in the operation box 400. The left grip portion 411L2 is connected to an upper end of the left column 411L1 and is gripped by the operator.

Similarly, the right operation lever 411R includes a right column 411R1 and a right grip portion 411R2. The right column 411R1 is a right part that passes through a right opening P2 (see FIG. 5) provided in the upper surface 400U of the operation box 400 and protrudes upward from the upper surface 400U. The right opening P2 is formed in a rectangular shape extending in the front-rear direction and defines a swing range of the right operation lever 411R (particularly, the right column 411R1) in the front-rear direction. A lower end of the right column 411R1 is fixed to a rotating shaft in the operation box 400. The right grip portion 411R2 is connected to the upper end of the right column 411R1 and is gripped by the operator.

When the left column 411L1 swings in the front-rear direction through the left opening P1 and the right column 411R1 swings in the front-rear direction through the right opening P2, the pair of left and right operation levers 411L and 411R swing within respective swing areas SA shown in FIG. 5. That is, each swing area SA is defined by the swing range when the pair of left and right operation levers 411L and 411R swing in the front-rear direction as viewed from above.

More specifically, each swing area SA includes a left swing area SA-L and a right swing area SA-R. The left swing area SA-L refers to a swing range when the left operation lever 411L swings in the front-rear direction as viewed from above. The right swing area SA-R refers to a swing range when the right operation lever 411R swings in the front-rear direction as viewed from above. The left swing area SA-L and the right swing area SA-R are located on the left and right sides opposite to each other with a middle area MA therebetween. That is, the middle area MA is interposed between the left swing area SA-L and the right swing area SA-R in the left-right direction. In addition, the middle area MA is located on the reference line RE. The left operation lever 411L and the left opening P1 are located on the left side of the middle area MA. The right operation lever 411R and the right opening P2 are located on the right side of the middle area MA.

The blade lever 412 is a lever for rotationally moving the blade 23 (see FIG. 1) up and down and is provided at a middle stage of a right-side part 400R of the operation box 400. When the operator operates the blade lever 412, a blade cylinder 23a (see FIG. 1) can be expanded and contracted so as to rotationally move the blade 23 in the up-down direction.

The hydraulic excavator 1 of this Embodiment has an expansion / contraction mechanism capable of changing an interval between the left and right crawlers 21. The expansion / contraction lever 413 of the operation portion 41b is a lever for changing the interval between the left and right crawlers 21 and is provided on the middle stage of the right-side part 400R of the operation box 400. An operator can move the pair of left and right crawlers 21 in the left-right direction with respect to a main-body frame of the lower traveling body 2 by operating the expansion / contraction lever 413 so as to expand and contract an expansion / contraction hydraulic cylinder (not shown). As a result, the interval between the left and right crawlers 21 can be changed. For example, when the inside of a building is demolished by the hydraulic excavator 1, the interval between the right and left crawlers 21 is narrowed when the hydraulic excavator 1 passes through an entrance of the building. As a result, the hydraulic excavator 1 can easily pass through the entrance. In addition, by widening the interval between the left and right crawlers 21 inside the building, it is possible to stably perform the demolishing work by the work implement 3 (for example, a breaker).

The boom swing pedal 414 is a pedal for causing the boom 31 to swing and is provided at a lower part of the right-side part 400R of the operation box 400. The operator can cause the boom 31 to swing by stepping on the boom swing pedal 414 so as to extend / contract a swing cylinder 42b (see FIG. 2).

A PTO pedal 415 is used when an attachment such as a breaker is mounted instead of the bucket 33. The PTO pedal 415 is provided at a lower part of the left-side part 400L of the operation box 400. The operator can drive the attachment appropriately by stepping on the PTO pedal 415 so as to adjust the hydraulic pressure to be supplied to the attachment.

### 3-2. Display Device

The display device 420 described above is constituted by, for example, a liquid-crystal display device, and notifies the operator of the state of the hydraulic excavator 1 by screen display. The display device 420 is disposed on the upper surface 400U of the operation box 400.

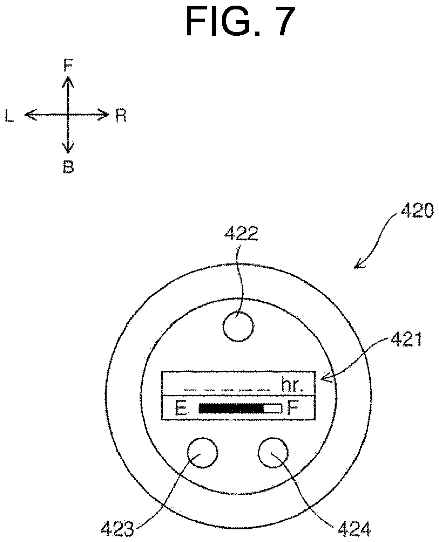

FIG. 7 is a plan view schematically showing a display screen of the display device 420. As shown in the figure, the display device 420 has a display area 421 at a center of the screen. On an upper stage (front side of the machine body) of the display area 421, an hour meter indicating operation time of the hydraulic excavator 1 (particularly, the electric motor 61) is digitally displayed as the state of the hydraulic excavator 1, for example. In addition, a charge amount of the battery unit 51 or the like is displayed as a state of the hydraulic excavator 1 by a bar graph on a lower stage (rear side of the machine body) of the display area 421.

The display device 420 further includes a first lighting area 422, a second lighting area 423, and a third lighting area 424. The first lighting area 422, the second lighting area 423, and the third lighting area 424 are located on the upper side of the screen (the front side of the machine body) or the lower side of the screen (the rear side of the machine body) in the display area 421. The first lighting area 422, the second lighting area 423, and the third lighting area 424 are lighted in a predetermined color, when the hydraulic excavator 1 is brought into a predetermined state. For example, when the battery unit 51 is being charged, the first lighting area 422 is lit in green. In addition, when the charge amount of the battery unit 51 falls below the predetermined amount, the second lighting area 423 is lit in yellow so as to call the operator's attention. When an abnormality occurs in the hydraulic excavator 1, the third lighting area 424 is lit in red so as to notify the operator of the abnormality.

Note that, though the display screen of the display device 420 has a circular shape in a plan view, the shape of the display screen is not particularly limited and may be another shape such as a rectangular shape. In addition, the number of lighting areas is not limited to the above-described three, and can be changed as appropriate.

As described above, the operation box 400 has the display device 420, which is disposed on the upper surface 400U and notifies the state of the hydraulic excavator 1.

In this Embodiment, as shown in FIG. 5, the display device 420 is disposed on the upper surface 400U of the operation box 400 by being shifted to the left side with respect to the operation lever 411. More specifically, the display device 420 is disposed on the left side with respect to the reference line RE on the upper surface 400U. In this case, the display device 420 is disposed at a position closer to the left-side part 400L of the operation box 400 than the operation lever 411. Note that the display device 420 may be disposed on the upper surface 400U by being shifted to the right side with respect to the operation lever 411. More specifically, the display device 420 may be disposed on the right side with respect to the reference line RE on the upper surface 400U. In this case, the display device 420 is disposed at a position closer to the right-side part 400R of the operation box 400 than the operation lever 411.

As described above, in this Embodiment, the display device 420 is disposed on the upper surface 400U on one side in the left-right direction with respect to the reference line RE extending in the swing direction through a space between the pair of left and right operation levers 411L and 411R.

In addition, the display device 420 is disposed on the outer side of each swing area SA of the pair of left and right operation levers 411L and 411R on the upper surface 400U and is disposed on one side in the left-right direction with respect to the middle area MA interposed between the left swing area SA-L and the right swing area SA-R. In the example of FIG. 5, the display device 420 is disposed on the left side of the middle area MA on the upper surface 400U. Note that the display device 420 may be disposed on the right side of the middle area MA on the upper surface 400U.

As described above, the display device 420 is disposed on the upper surface 400U of the operation box 400 so as not to overlap with each swing area SA and is disposed by being shifted to one of the left and right sides with respect to the middle area MA. As a result, even when the operation lever 411 protruding upward from the upper surface 400U of the operation box 400 is at any swing position in the front-rear direction, it is possible to reduce the possibility that the field of view when the operator seated on the driver's seat 41a views the display device 420 is obstructed by the operation lever 411. Therefore, as in this Embodiment, even in a configuration in which the operation box 400 is disposed in front of the driver's seat 41a, and the operation box 400 supports the operation lever 411 so as to be swingable in the front-rear direction, it is possible to preferably ensure the field of view of the operator when viewing the display device 420.

In particular, as shown in FIG. 6, the display device 420 is disposed on one side (the left side in the example of FIG. 6) in the left-right direction with respect to both of the columns (the left column 411L1 and the right column 411R1) of the pair of left and right operation levers 411L and 411R. In addition, the display device 420 is disposed on one side (left side in the example of FIG. 5) in the left-right direction with respect to the left opening P1 and the right opening P2 provided on the upper surface 400U. As a result, it is possible to reliably obtain the above-described effect that the field of view of the operator when viewing the display device 420 can be preferably ensured. Note that the display device 420 may be disposed on the right side with respect to both of the columns of the pair of left and right operation levers 411L and 411R. In addition, the display device 420 may be disposed on the right side with respect to the left opening P1 and the right opening P2 provided in the upper surface 400U.

Furthermore, as shown in FIG. 5, the display device 420 is disposed closer to the front of the operation lever 411 on the upper surface 400U. In this case, the operation lever 411 is located on the driver's seat 41a side with respect to the display device 420, that is, on the side closer to the operator seated on the driver's seat 41a.

With the disposition of the display device 420 as above, the operator can see the display device 420 through a space above the operation lever 411 even during the operation of the operation lever 411. That is, the operator can see the display device 420 without being hidden by the operation lever 411 and the arm of the operator who operates the operation lever 411. As a result, visibility when the operator views the display device 420 is reliably improved.

In particular, in the small-sized hydraulic excavator 1 in which the operation box 400 is close to the driver's seat 41a, when the display device 420 is located on the operator side with respect to the operation lever 411 supported by the operation box 400, the display device 420 is likely to be hidden by the arm of the operator who operates the operation lever 411. Therefore, the disposition of the display device 420 of this Embodiment shown in FIG. 5 is extremely effective particularly in the small-sized hydraulic excavator 1 in which the interval between the operation box 400 and the driver's seat 41a is small.

### 3-3. Accelerator Volume

The accelerator volume 430 is an operation tool for setting a target rotation speed of the electric motor 61 as a prime mover of the hydraulic excavator 1. As shown in FIG. 5, the accelerator volume 430 is disposed on the upper surface 400U of the operation box 400 by being shifted to the left side with respect to the operation lever 411. More specifically, the accelerator volume 430 is disposed on the left side with respect to the reference line RE on the upper surface 400U. In this case, the accelerator volume 430 is disposed at a position closer to the left-side part 400L of the operation box 400 than the operation lever 411. Note that the accelerator volume 430 may be disposed on the upper surface 400U by being shifted to the right side with respect to the operation lever 411. More specifically, the accelerator volume 430 may be disposed on the right side with respect to the reference line RE on the upper surface 400U. In this case, the accelerator volume 430 is disposed at a position closer to the right-side part 400R of the operation box 400 than the operation lever 411.

As described above, the accelerator volume 430 is disposed on one side in the left-right direction with respect to the reference line RE on the upper surface 400U of the operation box 400. In other words, the accelerator volume 430 is disposed on one side in the left-right direction with respect to the middle area MA on the upper surface 400U. In this case, the operator seated on the driver's seat 41a can operate the accelerator volume 430 without interfering with the operation of the operation lever 411 that swings in the front-rear direction. In this respect, it is desirable that the hydraulic excavator 1 includes the accelerator volume 430 disposed as described above.

In particular, from the viewpoint of realizing a layout in which the accelerator volume 430 is disposed close to the display device 420 on the upper surface 400U of the operation box 400, the accelerator volume 430 is desirably disposed as follows. That is, it is desirable that the accelerator volume 430 is disposed on the same side as the disposition side of the display device 420 in the left-right direction with respect to the reference line RE on the upper surface 400U. In other words, it is desirable that the accelerator volume 430 is disposed on the same side as the disposed side of the display device 420 in the left-right direction with respect to the middle area MA on the upper surface 400U. For example, as shown in FIG. 5, when the display device 420 is disposed on the left side with respect to the reference line RE (or the middle area MA), it is desirable that the accelerator volume 430 is also disposed on the left side with respect to the reference line RE (or the middle area MA).

The accelerator volume 430 is disposed side by side on the left side of the display device 420. That is, the display device 420 is disposed adjacent to the accelerator volume 430. In this case, since the accelerator volume 430 and the display device 420 are disposed close to each other, the operator can set (adjust) the target rotation speed of the electric motor 61 by operating the accelerator volume 430 while checking the information displayed on the display device 420. Note that the accelerator volume 430 may be disposed on the right side of the display device 420 or may be disposed in front or rear of the display device 420.

The accelerator volume 430 is a rotary dial 430a. In this case, setting of the target rotation speed of the electric motor 61 is facilitated by the rotating operation (dial operation) of the dial 430a.

### 3-4. Key Switch and Alarm Lamp

A key switch 440 is disposed in the operation box 400. The key switch 440 is a start switch for starting the hydraulic excavator 1. The key switch 440 is constituted by a key cylinder which accepts a key operation only when a predetermined key 440a is inserted. The key switch 440 is provided on an upper part of a left-side part 400L of the operation box 400. Note that the key switch 440 may be provided on the right-side part 400R of the operation box 400, but it is desirable to provide the key switch 440 on the left-side part 400L closer to the accelerator volume 430 for the reason described later.

The operator can start the hydraulic excavator 1 by inserting the key 440a into the key switch 440 (key cylinder) and turning it to the start position. In addition, the operator can stop the start of the hydraulic excavator 1 by turning the key 440a to an off position and can remove the key 440a from the key switch 440. As described above, the hydraulic excavator 1 is disposed on the side part of the operation box 400 and includes the key switch 440 for starting the hydraulic excavator 1.

The key switch 440 is disposed on the left side of the accelerator volume 430 in a plan view. After starting the hydraulic excavator 1 by the key operation on the key switch 440, the operator operates the accelerator volume 430 to set a target rotation speed of the electric motor 61. It is desirable that the key switch 440 is disposed adjacent to the accelerator volume 430 in a plan view from the viewpoint that the accelerator volume 430 can be operated immediately after the hydraulic excavator 1 is started.

The alarm lamp 450 is disposed in the operation box 400. The alarm lamp 450 is turned on at the time of warning. For example, when wearing of the seat belt is not detected after the hydraulic excavator 1 is started, the alarm lamp 450 is turned on to prompt the operator to fasten the seat belt. As described above, the hydraulic excavator 1 includes the alarm lamp 450 which is turned on at the time of warning.

The alarm lamp 450 is disposed in the rear of the accelerator volume 430 on the upper surface 400U of the operation box 400. In this disposition, the alarm lamp 450 is closer to the driver's seat 41a (operator) than the accelerator volume 430. Therefore, it is easy for the operator to simultaneously confirm presence or absence of lighting of the alarm lamp 450 (the presence or absence of a warning) when operating the accelerator volume 430.

In particular, the alarm lamp 450 is turned on when the seat belt of the driver's seat 41a is not fastened after the hydraulic excavator 1 is started by the key switch 440. The warning as above is effective in such a point that the operator can be immediately prompted to fasten the seat belt.

### 3-5. Switching Switch

The hydraulic excavator 1 of this Embodiment includes the switching switch 460. The switching switch 460 is a switch for enabling the predetermined function of the hydraulic excavator 1. The switching switch 460 includes, for example, a beacon switch 461, a two speed switch 462, and a work-lamp switch 463. The beacon switch 461, the two speed switch 462, and the work-lamp switch 463 are disposed in this order from the left side to the right side, but the disposed positions (the order of disposition in the left-right direction) can be changed as appropriate.

The beacon switch 461 is operated by an operator when a work by the hydraulic excavator 1 is to be started. When the operator operates the beacon switch 461, the second display lamp 46b shown in FIG. 2 is switched between on and off.

The two speed switch 462 is a switch for switching the traveling speed (gear shift) of the hydraulic excavator 1. When the operator operates the two speed switch 462, the hydraulic excavator 1 can be made to travel at a first speed (relatively low speed per hour) or a second speed (relatively high speed per hour). For example, the gear of the hydraulic excavator 1 is shifted to the first speed at a work by the hydraulic excavator 1, and the gear of the hydraulic excavator is shifted to the second speed at the traveling on road.

The work-lamp switch 463 is a switch for switching on and off of a work lamp 31P (see FIG. 2). When performing a work by the hydraulic excavator 1, the operator can turn on the work lamp 31P by operating the work-lamp switch 463 as necessary.

The switching switch 460 as above is disposed on the upper surface 400U of the operation box 400.

More specifically, the switching switch 460 is disposed on the right side with respect to the reference line RE on the upper surface 400U. Note that the switching switch 460 may be disposed on the left side with respect to the reference line RE on the upper surface 400U. It is desirable that the switching switch 460 is disposed by being shifted in the left-right direction with respect to the operation lever 411 in such a point that the operator can easily operate the switching switch 460 without interfering with the operation of the operation lever 411 that swings in the front-rear direction. That is, it is desirable that the switching switch 460 is disposed on one side in the left-right direction with respect to the reference line RE on the upper surface 400U of the operation box 400. In other words, it is desirable that the switching switch 460 is disposed on one side in the left-right direction with respect to the middle area MA on the upper surface 400U of the operation box 400.

In particular, in this Embodiment, the switching switch 460 is disposed by being shifted to the right side opposite to the left side on which the display device 420 is disposed with respect to the operation lever 411. That is, the switching switch 460 is disposed on the side opposite to the disposed side of the display device 420 in the left-right direction with respect to the reference line RE (or the middle area MA). In this case, the operator can confirm the information displayed on the display device 420 without being obstructed by the operation of the switching switch 460. Therefore, both the visibility of the display device 420 by the operator and the operability of the switching switch 460 are preferably ensured.

As shown in FIG. 5, the switching switch 460 is disposed in front of the operation lever 411. In this case, the operation lever 411 is located on the operator side (driver's seat 41a side) with respect to the switching switch 460. When the switching switch 460 is disposed as above, even during the operation of the operation lever 411, the operator can visually recognize the switching switch 460 without being hidden by the operation lever 411 and the arm of the operator who operates the operation lever 411.

Therefore, the operator can immediately switch, for example, from the operation of the operation lever 411 to the operation of the switching switch 460, thereby improving the operability of the switching switch.

In particular, in the small-sized hydraulic excavator 1 in which the operation box 400 is close to the driver's seat 41a, when the switching switch 460 is located on the operator side with respect to the operation lever 411 supported by the operation box 400, the switching switch 460 is likely to be hidden by the arm of the operator who operates the operation lever 411. Therefore, the disposition of the switching switch 460 shown in FIG. 5 is extremely effective particularly in the small-sized hydraulic excavator 1 in which the interval between the operation box 400 and the driver's seat 41a is small.

### 4. Supplement

Although the configuration in which the hydraulic excavator 1 includes the electric motor 61 as a prime mover has been described in this Embodiment, the prime mover may be an engine.

In this Embodiment, the hydraulic excavator 1, which is a construction machine, has been described as an example of the work machine, but the work machine is not limited to the hydraulic excavator 1 and may be other construction machines such as a wheel loader, a compact truck loader and the like. In addition, the work machine may be an agricultural machine such as a combine harvester, a tractor and the like.

### 5. Supplementary Notes

The work machine described in this Embodiment can also be expressed as the following Supplementary Notes.

The work machine of Supplementary Note (1) is
a work machine including an operation box that is disposed in front of a driver's seat and supports a pair of left and right operation levers protruding upward from an upper surface so as to be swingable in a front-rear direction, in which
the operation box has a display device disposed on the upper surface and configured to notify a state of the work machine, and
the display device is disposed on an outer side of each swing area of the pair of left and right operation levers and is disposed on one side in the left-right direction with respect to a middle area interposed between the left and right swing areas on the upper surface.

Regarding the work machine of Supplementary Note (2), in the work machine described in Supplementary Note (1),
the display device is disposed on the one side in the left-right direction with respect to both of columns of the pair of left and right operation levers.

Regarding the work machine of Supplementary Note (3), in the work machine described in Supplementary Note (1) or (2),
the display device is disposed on the one side in the left-right direction with respect to both openings provided in the upper surface and through which each of the columns of the pair of left and right operation levers passes.

The work machine of Supplementary Note (4), in the work machine described in any one of Supplementary Notes (1) to (3), further includes
an operation tool for setting a target rotation speed of a prime mover of the work machine, in which
the operation tool is disposed on one side in the left-right direction with respect to the middle area on the upper surface.

Regarding the work machine of Supplementary Note (5), in the work machine described in Supplementary Note (4),
the operation tool is disposed on the same side as a disposed side of the display device in the left-right direction with respect to the middle area on the upper surface.

Regarding the work machine of Supplementary Note (6), in the work machine described in Supplementary Note (5),
the display device is disposed adjacent to the operation tool.

The work machine of Supplementary Note (7), in the work machine described in Supplementary Note (5) or (6), further includes
a start switch disposed on a side part of the operation box and configured to start the work machine, in which
the start switch is disposed adjacent to the operation tool in a plan view.

The work machine of Supplementary Note (8), in the work machine described in Supplementary Note (7), further includes
a lamp that is turned on at the time of warning, in which
the lamp is disposed in the rear of the operation tool on the upper surface of the operation box.

Regarding the work machine of Supplementary Note (9), in the work machine described in Supplementary Note (8),
the lamp is turned on, when a seat belt of the driver's seat is not fastened after the work machine is started by the start switch.

Regarding the work machine of Supplementary Note (10), in the work machine described in any one of Supplementary Notes (4) to (9),
the operation tool is a dial.

Regarding the work machine of Supplementary Note (11), in the work machine described in any one of Supplementary Notes (1) to (10),
the display device is disposed in front of the operation lever.

The work machine of Supplementary Note (12), in the work machine described in any one of Supplementary Notes (1) to (11), further includes
a switching switch for enabling a predetermined function of the work machine, in which
the switching switch is disposed on one side in the left-right direction with respect to the middle area on the upper surface.

Regarding the work machine of Supplementary Note (13), in the work machine described in Supplementary Note (12),
the switching switch is disposed on a side opposite to a side on which the display device is disposed in the left-right direction with respect to the middle area.

Regarding the work machine of Supplementary Note (14), in the work machine described in Supplementary Note (12) or (13),
the switching switch is disposed in front of the operation lever.

The Embodiment of the present invention has been described above, but the scope of the present invention is not limited thereto, and the present invention can be implemented by being expanded or changed within a range not departing from the gist of the invention.

### INDUSTRIAL APPLICABILITY

The present invention is applicable to work machines such as construction machines and agricultural machines, for example.

### REFERENCE SIGNS LIST

1 Hydraulic excavator (work machine)
41a Driver's seat
61 Electric motor (prime mover)
400 Operation box
400L Left-side part (side part)
400U Upper surface
411 Operation lever (pair of left and right operation levers)
411L Operation lever (left side)
411L1 Left column (column)
411R Operation lever (right side)
411R1 Right column (column)
420 Display device
430 Accelerator volume
430a Dial
440 Key switch (start switch)
450 Alarm lamp (lamp)
460 Switching switch
461 Beacon switch (switching switch)
462 Two speed switch
463 Work-lamp switch (switching switch)
MA Middle area
P1 Left opening (opening part)
P2 Right opening (opening part)
RE Reference line
SA Swing area
SA-L Left swing area
SA-R Right swing area

## Claims

1. A work machine comprising an operation box that is disposed in front of a driver's seat and supports a pair of left and right operation levers protruding upward from an upper surface swingably in a front-rear direction, wherein
the operation box has a display device disposed on the upper surface and notifying a state of the work machine, and
the display device is disposed on an outer side of each swing area of the pair of left and right operation levers on the upper surface and disposed on one side in a left-right direction with respect to a middle area interposed between the left and right swing areas.

2. The work machine according to claim 1, wherein the display device is disposed on the one side in the left-right direction with respect to both of columns of the left and right pair of operation levers.

3. The work machine according to claim 1, wherein the display device is disposed on the one side in the left-right direction with respect to both openings provided in the upper surface and through which each of columns of the pair of left and right operation levers passes.

4. The work machine according to claim 1, further comprising an operation tool for setting a target rotation speed of a prime mover of the work machine, wherein
the operation tool is disposed on one side in the left-right direction with respect to the middle area on the upper surface.

5. The work machine according to claim 4, wherein the operation tool is disposed on the same side as a disposed side of the display device in the left-right direction with respect to the middle area on the upper surface.

6. The work machine according to claim 5, wherein the display device is disposed adjacent to the operation tool.

7. The work machine according to claim 5, further comprising a start switch disposed on a side part of the operation box and for starting the work machine, wherein
the start switch is disposed adjacent to the operation tool in a plan view.

8. The work machine according to claim 7, further comprising a lamp that is turned on at the time of warning, wherein
the lamp is disposed in the rear of the operation tool on the upper surface of the operation box.

9. The work machine according to claim 8, wherein the lamp is turned on, when a seat belt of the driver's seat is not fastened after the work machine is started by the start switch.

10. The work machine according to claim 4, wherein the operation tool is a dial.

11. The work machine according to claim 1, wherein the display device is disposed in front of the operation lever.

12. The work machine according to claim 1, further comprising a switching switch for enabling a predetermined function of the work machine, wherein
the switching switch is disposed on one side in the left-right direction with respect to the middle area on the upper surface.

13. The work machine according to claim 12, wherein the switching switch is disposed on a side opposite to a side on which the display device is disposed in the left-right direction with respect to the middle area.

14. The work machine according to claim 12, wherein the switching switch is disposed in front of the operation lever.
